# DEMANDE DE BREVET EUROPEEN

(11) **EP 0 990 500 A1**
(43) Date de publication de la demande: **05.04.2000**
(21) Numéro de dépôt: 99402375.2
(22) Date de dépôt: 29.09.1999
(51) Int. Cl.: B29C 45/00, B29C 70/64

(54) **Procédé de moulage par injection de pièces à partir d'un mélange de résine thermoplastique et d'un additif**

(30) Priorité: 29.09.1998 FR 9812137
(71) Demandeur: GROSFILLEX S.A.R.L., F-01107 Oyonnax (FR)
(72) Inventeur: Demond, Denis, 39270 Ecrilles (FR)
(74) Mandataire: Intes, Didier Gérard André

(57) **Abrégé**

Selon le procédé, on mélange de la résine thermoplastique de base, par exemple du polypropylène, avec un additif qui comprend un matériau de charge et une substance apte à dégager un gaz dans des conditions de température et de pression dans lesquelles la résine thermoplastique de base est dans un état de ramollissement qui permet son injection et dans lequel ladite résine de base ne dégage pas de gaz. On porte le mélange dans de telles conditions de température et de pression pour réaliser l'injection dans le moule (22, 24) de manière à obtenir des objets présentant des pigmentations provenant du matériau de charge et des traces analogues à des traces de givre provenant de l'écoulement du gaz dégagé par ladite substance dans le moule.

## Description

La présente invention concerne un procédé de fabrication de pièces à base de matière thermoplastique, selon lequel on mélange de la résine thermoplastique de base avec un additif comprenant un matériau de charge, on porte ce mélange à une température de ramollissement de la résine thermoplastique de base et l'on injecte ledit mélange ramolli dans un moule pour fabriquer les pièces par moulage.

On entend par "état ramolli", l'état dans lequel le mélange se présente sous la forme d'un fluide visqueux apte à être injecté dans le moule de façon conventionnelle.

Des procédés de ce type dits de "moulage par injection" sont couramment utilisés, par exemple pour fabriquer du mobilier en matière plastique. On sait qu'en choisissant convenablement la résine thermoplastique de base (il s'agit en général de polypropylène) on obtient des pièces dont le prix de revient est faible et qui présentent toutes les caractéristiques mécaniques propres à leur utilisation.

Les pièces obtenues peuvent être blanches ou colorées, si un adjuvant de coloration a été ajouté à la résine thermoplastique de base. Toutefois, du fait de la nature même de la matière plastique, ces pièces ont un aspect peu naturel, relativement brillant et lisse, ce qui conduit parfois les utilisateurs à préférer à la matière plastique un matériau plus noble tel que le bois.

On a déjà tenté d'ajouter à la résine thermoplastique de base un additif destiné à conférer aux pièces obtenues un aspect plus naturel. Ainsi, la demande de brevet français FR 2 413 205 préconise de mélanger de la sciure de bois au polypropylène formant la résine de base. Cette demande de brevet préconise d'utiliser la sciure dans une proportion de 10 à 50% en masse et de porter les parties avant et arrière du cylindre d'injection à des températures différentes, sans dépasser le seuil de décomposition du bois, de manière à obtenir une pièce moulée ayant des marbrures lui donnant l'apparence du bois.

Les proportions de sciure de bois indiquées dans cette demande sont importantes et risqueraient de nuire aux qualités mécaniques de certaines pièces moulées, en particulier des chaises ou des tables de mobilier de jardin, qui doivent être suffisamment solides. Par ailleurs, les réglages de la température du cylindre d'injection préconisés dans ce document sont difficiles à obtenir.

Enfin, la seule présence de marbrures ne suffit pas à donner à des pièces plastiques l'aspect du bois. En effet, même si ces marbrures donnent une coloration irrégulière, la pièce garde un toucher relativement lisse et un aspect global relativement brillant et peu naturel.

L'invention vise à proposer un procédé de fabrication de pièces par injection et moulage à base de matière thermoplastique qui permette l'obtention de pièces présentant un aspect extérieur proche de l'aspect d'un matériau naturel et qui soit compatible avec la fabrication de pièces de dimensions relativement importantes, telles que des sièges ou des tables de jardin.

Ce but est atteint grâce au fait que l'on utilise un additif comprenant, outre le matériau de charge, une substance apte à dégager un gaz dans des conditions de température et de pression dans lesquelles la résine thermoplastique de base est dans un état de ramollissement qui permet son injection et dans lequel ladite résine ne dégage pas de gaz, et au fait que l'on place le mélange dans lesdites conditions de température et de pression pour réaliser l'injection dans le moule de manière à obtenir des objets présentant des traces ponctuelles brunes provenant du matériau de charge et des traces analogues à des traces de givre provenant de l'écoulement du gaz dégagé par ladite substance dans le moule.

Ainsi, selon l'invention, on choisit délibérément de "dégrader" l'additif de manière à obtenir un dégagement de gaz dans le moule. Ce gaz, même s'il se situe pour partie dans l'épaisseur des pièces, a tendance à s'acheminer vers l'interface entre la matière plastique injectée dans le moule et les parois du moule. Il en résulte des traces d'écoulement qui occasionnent localement des traînées à la surface de la pièce injectée, sur lesquelles la matière plastique est légèrement opacifiée ou rendue plus mate. En fait, ces traces ou ces traînées sont analogues à des traces de givre et sont très légèrement blanchâtres, avec une très légère rugosité, un voile blanchâtre translucide peut même apparaître à la surface de la pièce.

Dans la mesure où elles proviennent de l'écoulement d'un gaz, ces traces présentent un aspect relativement aléatoire et naturel, analogue à l'aspect que pourraient présenter les traces de très légères érosions à la surface d'un objet en matériau naturel. Ainsi, les pièces obtenues par moulage présentent une patine apparente de surface qui augmente leur ressemblance avec des pièces naturelles.

Par ailleurs, le matériau de charge donne des traces ponctuelles brunes ou pratiquement noires qui se répartissent de manière relativement homogène mais non régulière. Plus précisément, ces traces ne sont pas disposées selon une structure organisée, mais elles sont réparties de telle sorte que le nombre de ces traces par unité de surface de la pièce soit sensiblement constant. Ceci augmente encore la ressemblance avec des pièces en matière naturelle.

Il faut noter que, en particulier grâce à l'effet de "givrage", il n'est pas nécessaire d'ajouter l'additif dans des proportions importantes pour obtenir l'effet souhaité. Par exemple, le matériau de charge pourra être présent dans une proportion de l'ordre de 0,1 à 2 % en masse dans le mélange. Il en résulte que la présence de l'additif est pratiquement inopérante sur la cohésion intrinsèque de la résine thermoplastique de base, de sorte que la pièce obtenue par injection et par moulage présente des caractéristiques mécaniques tout à fait analogues à celles qu'elle aurait si elle était fabriquée uniquement à partir de la résine thermoplastique de base.

Avec l'invention, les temps de refroidissement qui doivent être respectés avant le démoulage des pièces injectées sont identiques ou pratiquement identiques aux temps de refroidissement de pièces analogues en polypropylène. Par conséquent, les cadences peuvent être aussi élevées que pour des pièces "classiques".

De manière avantageuse, le matériau de charge de l'additif comprend des fibres végétales. Ainsi, les pièces obtenues peuvent présenter un aspect proche du bois.

Avantageusement on choisit un matériau de charge susceptible d'être au moins partiellement carbonisé dans les conditions de température et de pression précitées.

Cette carbonisation au moins partielle a deux effets.

Premièrement, les traces ponctuelles, dues à la présence du matériau de charge sont noircies, de sorte qu'elles se présentent comme des petits "grains" noirâtres.

Deuxièmement, les produits de la carbonisation se mélangent à la résine thermoplastique et occasionnent des traînées brunâtres dans cette résine, ce qui augmente encore la ressemblance avec un matériau naturel tel que du bois.

Avantageusement, les conditions opératoires sont telles, qu'à l'entrée du mélange dans le moule, la pression dudit mélange est comprise entre 800 et 1.500 bar, tandis que la température de ce mélange est comprise entre 210°C et 270°C. Encore plus avantageusement, on choisira une température comprise entre 240°C et 260°C afin d'éviter une carbonisation excessive du matériau de charge et de mieux maîtriser l'apparition de la teinte brunâtre due à la carbonisation partielle.

L'invention sera bien comprise et ses avantages apparaîtront mieux à la lecture de la description détaillée qui suit de la figure unique qui présente, à titre d'exemple, des moyens de moulage par injection permettant de mettre en oeuvre l'invention.

La figure montre une presse à injecter qui, de manière classique, comprend une trémie 10 de collecte de granulés de résine thermoplastique et un cylindre d'injection 12 à l'intérieur duquel les granulés sont acheminés de la sortie de la trémie vers la buse d'injection 14 par une vis hélicoïdale 16 entraînée en rotation par un moteur 18. A l'aide d'un ou plusieurs colliers chauffants 20, le cylindre 12 est porté à une température qui, associée au dégagement de chaleur dû à la friction de la vis 16 sur les granulés, permet la fusion de ces granulés thermoplastiques pour les transformer en fluide visqueux injectable.

Le moule d'injection est représenté à l'état ouvert. Il comporte un plateau fixe 22 raccordé en 23 à la buse d'injection, ainsi qu'un plateau mobile 24 présentant un système d'éjection 26 pour les pièces moulées. Pour l'injection, le plateau 24 se rapproche du plateau 22 dans le sens de la flèche F, de manière à refermer le moule, puis la matière plastique pâteuse est injectée par la buse 14 à l'intérieur du moule. Le moule est ensuite ouvert quand la matière plastique s'est suffisamment refroidie et le système 26 est actionné pour éjecter les pièces moulées et refroidies.

Le système de déplacement du plateau 24 est représenté schématiquement et désigné par le repère 28. La trémie 10 déverse dans le cylindre d'injection 12 un mélange comprenant de la résine thermoplastique de base provenant d'un réservoir d'alimentation 30 et un additif provenant d'un réservoir d'alimentation 32. Par exemple, les contenus des réservoirs 30 et 32 peuvent être mélangés en amont de la trémie et le mélange peut être brassé avant son arrivée dans la trémie de manière à présenter une répartition relativement homogène de l'additif dans la résine thermoplastique de base. On peut également déverser ces deux produits directement dans la trémie en équipant cette dernière éventuellement de moyens pour rendre le mélange homogène.

Il faut noter que, en plus de l'additif provenant du réservoir 32, divers adjuvants peuvent être mélangés à la résine thermoplastique de base avant l'injection. On peut utiliser une résine de base comprenant un adjuvant de charge tel que du talc ou du carbonate. De plus, on choisit généralement d'ajouter un adjuvant de coloration, dénommé "mélange maître", qui apportera la teinte de fond.

Outre le mélange maître, on peut également choisir d'ajouter un autre adjuvant de coloration destiné à donner un aspect jaspé aux pièces obtenues, les contrastes entre les veines de jaspure pouvant toutefois être relativement peu marqués et présenter plutôt un aspect "fondu". Pour ce faire, on choisit des colorants ayant des points de fusion différents et difficilement miscibles entre eux, de sorte que le deuxième adjuvant de coloration ne se mélange pas au premier et donne des veinages sur la pièce finalement obtenue.

Comme additif, on peut utiliser de la sciure de bois ayant absorbé une certaine quantité d'eau. Les particules de bois constituent le matériau de charge en lui-même, tandis que, lorsque les températures d'injection sont suffisantes (de l'ordre de 210°C à 270°C, sous les pressions d'injection de l'ordre de 800 à 1.500 bar), l'eau se dégage sous forme de vapeur d'eau, ce qui donne aux pièces moulées l'aspect de givrage souhaité. Outre la vapeur d'eau, les gaz dégagés peuvent également comprendre des gaz carbonés provenant de la combustion, au moins partielle des particules de bois.

Dans ce cas, on choisit la proportion de sciure de l'ordre de 0,1 à 0,3 % en masse, avantageusement de l'ordre de 0,2%. On peut utiliser plus ou moins de sciure selon le degré d'hygrométrie de cette dernière.

A cet égard, il est avantageux de contrôler le degré d'hygrométrie de l'additif (par exemple, la sciure) en réalisant une étape d'étuvage préliminaire de cet additif.

Toutefois, il est avantageux de choisir que l'additif comprenne une résine thermoplastique additionnelle, différente de la résine thermoplastique de base et susceptible de dégager un gaz dans des conditions de température et de pression dans lesquelles ladite résine thermoplastique de base est dans un état de ramollissement qui permet son injection et dans lequel cette résine thermoplastique de base ne dégage pas de gaz.

Dans ce cas, le dégagement gazeux permettant d'obtenir l'effet de givrage est directement dû à une "dégradation" de la résine thermoplastique additionnelle. La proportion de ce produit peut être très facilement déterminée et permet d'obtenir une reproductibilité excellente de l'effet de givrage. En effet, la quantité de gaz qui provient de la dégradation de la substance "apte à dégager un gaz" que contient la résine additionnelle et faiblement affectée par des paramètres d'environnement tels que le degré d'hygrométrie de l'atelier.

Par exemple, on peut utiliser une résine thermoplastique additionnelle obtenue à partir de produits naturels. Il peut s'agir de résines obtenues à partir de lignine alcaline et de dérivés protéineux. Ainsi, on peut obtenir un additif dont la résine thermoplastique additionnelle se "dégrade" en permettant le dégagement de gaz tout en choisissant, pour la résine de base, une résine dérivée de produits pétroliers, dont la température de dégradation est largement supérieure, telle que du polypropylène.

Le fluide issu de la fusion de la résine thermoplastique additionnelle puis de la dégradation de cette dernière s'écoule dans la résine thermoplastique de base et il en résulte des veinages analogues à ceux que peut présenter une pièce en bois.

Avantageusement, l'additif est constitué par la résine thermoplastique additionnelle dans laquelle est noyé le matériau de charge tel que des fibres végétales.

Avantageusement, l'additif se présente initialement sous la forme d'un granulat, dont le mélange avec la résine thermoplastique de base (qui se présente également initialement en général sous la forme d'un granulat) est plus aisé. Le granulat qui forme l'additif est avantageusement constitué de granules ayant des dimensions diamétrales comprises entre 2,5 mm et 6 mm. Par exemple, on pourra choisir des granules allongées ayant un diamètre de 3 mm et une longueur de l'ordre de 5 mm.

Par exemple, le granulat à base de substances naturelles formant l'additif peut être constitué par un granulat du type décrit par le brevet européen 0 720 634.

Un tel granulat peut être mélangé à la résine thermoplastique de base dans une proportion de l'ordre de 1 % à 3% en masse, par exemple de l'ordre de 2% en masse. Ceci peut correspondre à une proportion du matériau de charge en lui-même de l'ordre de 0,3 à 2 % en masse dans le mélange comprenant la résine thermoplastique de base et l'additif, compte tenu de la proportion du matériau de charge dans le granulat qui constitue l'additif.

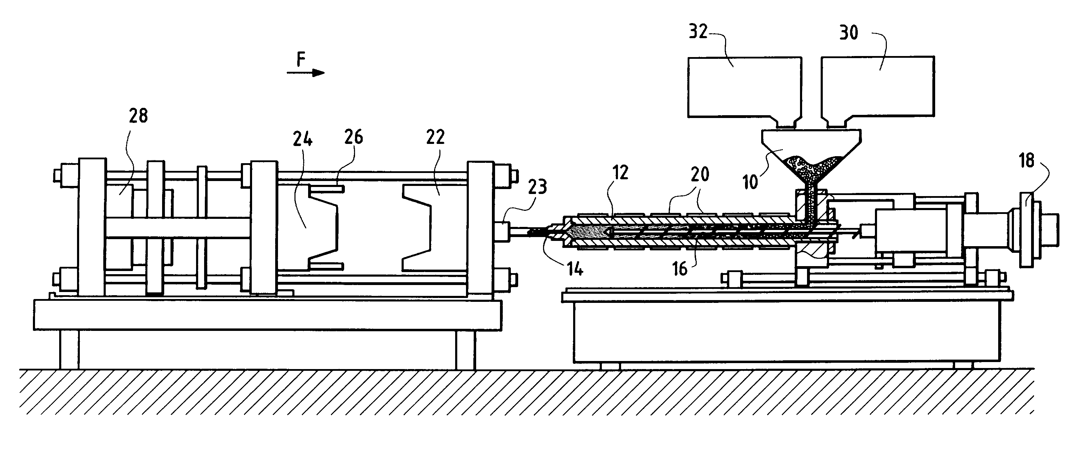

On a constaté qu'avec les produits indiqués ci-dessus, on obtient les résultats souhaités à la fois en matière de givrage et de carbonisation partielle du matériau de charge, en réalisant l'injection dans le moule à des pressions de l'ordre de 800 à 1.500 bar et en chauffant le mélange à des températures comprises entre 210°C et 270°C. Ces paramètres de pression et de température sont mesurés à l'entrée du moule indiquée par le repère 23 sur la figure 1. On pourra par exemple choisir une pression d'injection de l'ordre de 1.200 bars et une température de l'ordre de 240°C. L'effet de dégazage est mieux visible sur les parties de la pièce obtenue qui présentent une épaisseur suffisante, de l'ordre d'au moins deux à trois millimètres. Ainsi, lorsque cette pièce est constituée par une table, le plateau de cette table présentera un aspect très proche de celui du bois s'il présente une épaisseur moyenne de l'ordre de 3mm. De même, l'aspect de givrage est particulièrement bien visible sur l'assise, le dossier et les accoudoirs d'un fauteuil obtenu par moulage, lorsque ces parties de ce fauteuil présentent une épaisseur de l'ordre de 3mm.

En choisissant les quantités d'additif dans la plage indiquée ci-dessus et les conditions de température et de pression également dans la plage indiquée ci-dessus, on maîtrise l'effet de dégazage, c'est-à-dire qu'il permet d'obtenir l'effet de givrage souhaité sans que l'écoulement du gaz dans la masse de la pièce injectée n'occasionne la présence de bulles trop importantes qui pourraient nuire aux caractéristiques mécaniques de la pièce finalement obtenue.

## Revendications

1. Procédé de fabrication de pièces à base de matière thermoplastique, selon lequel on mélange de la résine thermoplastique de base (30) avec un additif (32) comprenant un matériau de charge , on porte ce mélange à une température de ramollissement de la résine thermoplastique de base et l'on injecte ledit mélange ramolli dans un moule (22, 24) pour fabriquer les pièces par moulage,
caractérisé en ce que l'on utilise un additif comprenant, outre le matériau de charge, une substance apte à dégager un gaz dans des conditions de température et de pression dans lesquelles la résine thermoplastique de base est dans un état de ramollissement qui permet son injection et dans lequel ladite résine ne dégage pas de gaz, et en ce que l'on place le mélange dans lesdites conditions de température et de pression pour réaliser l'injection dans le moule (22, 24) de manière à obtenir des objets présentant des pigmentations provenant du matériau de charge et des traces analogues à des traces de givre provenant de l'écoulement du gaz dégagé par ladite substance dans le moule.

2. Procédé selon la revendication 1, caractérisé en ce que l'on choisit un matériau de charge susceptible d'être au moins partiellement carbonisé dans les conditions de température et de pression précitées.

3. Procédé selon la revendication 1 ou 2, caractérisé en ce que, à l'entrée (23) du mélange dans le moule (22, 24), la pression dudit mélange est comprise entre 800 et 1500 bar, tandis que la température de ce mélange est comprise entre 210°C et 270°C.

4. Procédé selon la revendication 3, caractérisé en ce que la température du mélange à l'entrée (23) dans le moule (22, 24) est comprise entre 240°C et 260°C.

5. Procédé selon l'une quelconque des revendications 1 à 4, caractérisé en ce que le matériau de charge de l'additif comprend des fibres végétales.

6. Procédé selon l'une quelconque des revendications 1 à 5, caractérisé en ce que le matériau de charge est présent dans une proportion de 0,1 à 2 % en masse dans le mélange.

7. Procédé selon l'une quelconque des revendications 1 à 6, caractérisé en ce que l'additif comprend une résine thermoplastique additionnelle, différente de la résine thermoplastique de base et susceptible de dégager un gaz dans des conditions de température et de pression dans lesquelles la résine thermoplastique de base est dans un état de ramollissement qui permet son injection et dans lequel ladite résine thermoplastique de base ne dégage pas de gaz.

8. Procédé selon la revendication 7, caractérisé en ce que la résine thermoplastique additionnelle est obtenue à partir de produits naturels.

9. Procédé selon l'une quelconque des revendications 1 à 8, caractérisé en ce que l'additif se présente initialement sous la forme d'un granulat.

10. Procédé selon la revendication 9, caractérisé en ce que le granulat est constitué de granules ayant des dimensions diamétrales comprises entre 2,5 mm et 6 mm.
